# EUROPEAN PATENT SPECIFICATION

(11) **EP 4 254 536 B1**
(45) Date of publication and mention of the grant of the patent: **19.03.2025**
(21) Application number: 23163782.8
(22) Date of filing: 23.03.2023
(51) Int. Cl.: H01M 4/04, H01M 10/0587, H01M 50/103, H01M 50/105, H01M 50/533, H01M 50/534, H01M 50/536, H01M 50/538, H01M 50/54, H01M 50/55

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(30) Priority: 31.03.2022 CN 202210346726
(43) Date of publication of application: 04.10.2023
(73) Proprietor: DONGGUAN POWERAMP TECHNOLOGY LIMITED, Songshan Lake Park Dongguan City Guangdong 523000 (CN)
(72) Inventor: LI, Weiwei, Dongguan City, Guangdong 523000 (CN)
(74) Representative: Icosa

(56) References cited:
- EP-A1- 4 220 848
- WO-A1-2020/103014
- CN-A- 113 270 671
- CN-A- 113 437 444
- CN-U- 215 070 100
- US-A1- 2019 089 005
- YAO XING-YAN ET AL: "Tab Design and Failures in Cylindrical Li-ion Batteries", IEEE ACCESS, vol. 7, 15 February 2019 (2019-02-15), pages 24082 - 24095, XP011713245, DOI: 10.1109/ACCESS.2019.2899793

## Description

### TECHNICAL FIELD

This application relates to the technical field of energy storage, and in particular, to an electrochemical device and an electronic device.

### BACKGROUND

An electrochemical device is a device that converts external energy into electrical energy for being stored internally so that the stored electrical energy can be supplied to an external device (such as a portable electronic device) when necessary. Generally, an electrochemical device includes a housing, an electrode assembly accommodated in the housing, and tabs. The electrode assembly includes a first electrode plate, a second electrode plate, and a separator. The first electrode plate and the second electrode plate are of opposite polarities, and are separated by a separator in between. One end of a tab is connected to the first electrode plate, and the other end of the tab protrudes from the housing. A plurality of conductive sheets protrude from the edge of the second electrode plate, and the plurality of conductive sheets are stacked. One end of the other tab is welded to the stacked conductive sheets, and the other end of the other tab protrudes from the housing.

### SUMMARY

In the process of working out this application, the applicant of this application finds that: during the use of an electrochemical device, polarization increases and consistency is deficient between an active material layer of a first electrode plate and an active material layer of a second electrode plate. This disadvantage results in low cycle performance of the electrochemical device, especially a low cycle capacity retention rate.

This application aims to provide an electrochemical device and an electronic device to alleviate the problem of the low cycle performance caused by poor consistency between the active material layer of the first electrode plate and the active material layer of the second electrode plate.

According to a first aspect, an embodiment of this application provides an electrochemical device. The electrochemical device includes a housing, an electrode assembly, a first tab, and a second tab. The electrode assembly is accommodated in the housing, the electrode assembly includes a first electrode plate, a second electrode plate, and a separator disposed between the first electrode plate and the second electrode plate. The first electrode plate, the second electrode plate, and the separator are stacked and then wound. The first electrode plate includes a first current collector. The second electrode plate includes a second current collector and a plurality of conductive sheets disposed together with the second current collector in one piece. The plurality of conductive sheets protrude from the second current collector along a first direction. The plurality of conductive sheets are stacked in a thickness direction of the electrode assembly to form a collection portion. The first direction is perpendicular to the thickness direction. The first tab is connected to the first current collector and protrudes out of the housing. The second tab is connected to the collection portion and protrudes out of the housing. A conductivity of the first tab is g₁ S/mm, a cross-sectional area of the first tab is s₁ mm², a conductivity of the plurality of conductive sheets is g₂ S/mm, a sum of cross-sectional areas of the plurality of conductive sheets s₂ mm², and the electrochemical device satisfies 0.8 ≤ (g₁ × s₁)/(g₂ × s₂) ≤ 1.2.

Because the first electrode plate accepts or donates electrons through a directly connected first tab while the second electrode plate accepts or donates electrons through a plurality of conductive sheets, the temperature increment differs between the first tab and the conductive sheets. In the related art, the temperature increments of both the first tab and the conductive sheets of the electrochemical device are usually high. The inconsistency between the temperature increment of the first tab and the temperature increment of the conductive sheets reduces the consistency between the first active material layer and the second active material layer, and in turn, deteriorates the performance of the electrochemical device, for example, reduces the cycle capacity retention rate of the electrochemical device.

By contrast, in an embodiment of this application, the electrochemical device satisfies: 0.8 ≤ (g₁ × s₁)/(g₂ × s₂) ≤ 1.2. In this case, the temperature increment difference between the first tab and the second tab is relatively small, and therefore, the consistency between the active material layer of the first electrode plate and the active material layer of the second electrode plate is still relatively high after charge-and-discharge cycles, and the cycle capacity retention rate of the electrochemical device is still relatively high. In other words, the electrochemical device according to this embodiment of this application alleviates the problem of poor consistency between the active material layer of the first electrode plate and the active material layer of the second electrode plate.

In some embodiments, the first tab is welded to the first current collector, a conductivity of the first current collector is g₃ S/mm, a welding area between the first tab and the first current collector is a₁ mm², and the electrochemical device satisfies min(g₁, g₃) × a₁/(g₂ × s₂) ≥ 0.8. In this way, the temperature increment difference between the conductive sheets and the welding region welded between the first tab and the first electrode plate is relatively small.

In some embodiments, the second tab is welded to the collection portion, a conductivity of the second tab is g₄ S/mm, a welding area between the second tab and the collection portion is a₂ mm², and the electrochemical device satisfies min(g₂, g₄) × a₂/(g₂ × s₂) ≥ 0.8. In this way, the temperature increment difference between the conductive sheets and the welding region welded between the first tab and the first electrode plate is relatively small.

In some embodiments, in a 25 °C environment temperature, a current intensity for discharging the electrochemical device at a constant current from a 100 % state of charge to a 0% state of charge within 1 hour is I mA, and the electrochemical device satisfies 1.4 ≤ (g₁ × s₁)/I ≤ 2.8. In this way, the flow capacity of the first tab is sufficient. Therefore, the temperature increment difference between a main region and the first tab is relatively small, the cycle capacity retention rate of the electrochemical device is still high, and the manufacturing cost of the first tab is reduced.

In some embodiments, the first tab includes a first portion, a second portion, and a third portion connected in sequence. The first portion is connected to the first current collector, the second portion is located outside the first current collector and disposed in a bent shape, and the third portion protrudes from the housing. The first tab includes a bent second portion. Therefore, when the first tab is impacted, the first tab can relieve a part of the impact force through deformation of the second portion, thereby reducing the impact force that finally reaches a junction between the first tab and the first electrode plate. Therefore, the electrochemical device according to this embodiment of this application alleviates the problem that the junction between the first tab and the first electrode plate is prone to be damaged by an external impact when the first tab is directly connected to the first electrode plate.

In some embodiments, the electrode assembly includes a first surface and a second surface that are opposite to each other in the thickness direction. The second portion includes: a first connecting section and a second connecting section. One end of the first connecting section is connected to the first portion and the other end extends toward the first surface. The second connecting section is located on a side of the first connecting section, the side of the first connecting section is away from the electrode assembly. One end of the second connecting section is connected to an end of the first connecting section, the end of the first connecting section is away from the first portion. The other end of the second connecting section is connected to the third portion. In this way, when the first tab is impacted, the second connecting section elastically bends toward the first connecting section, thereby removing a part of the impact force.

In some embodiments, the second portion further includes a bend section. The first connecting section and the second connecting section are disposed opposite to each other along the first direction. The bend section respectively connects an end of the first connecting section and an end of the second connecting section, the end of the first connecting section is close to the first surface, and the end of the second connecting section is close to the first surface. In this way, the second portion is of a U-shaped structure on the whole.

In some embodiments, in the thickness direction, a distance between the first surface and an end of the third portion is L₄₁ mm, the end of the third portion is close to the second portion, and a distance between the first surface and a part of the first portion is L₄₂ mm, the part of the first portion overlaps the first current collector in the thickness direction. An L₄₁/L₄₂ ratio is less than or equal to 1.1. A second direction is perpendicular to the first direction and the thickness direction. When the first tab is subjected to an external force along the first direction or bears a component force along the first direction, the second connecting section bends toward the electrode assembly. If, in the thickness direction, the end that is of the second connecting section and that is away from the first surface goes clearly beyond the end of the first connecting section, the end of the first connecting section is away from the first surface; then the end of the second connecting section, which is away from the first surface, may be inserted upside down until touching the second electrode plate in the electrode assembly, thereby causing a short circuit in the electrochemical device. Setting the L₄₁/L₄₂ ratio to a value less than or equal to 1.1 is intended to make the end of the second connecting section which is away from the first surface, not go beyond, or just slightly go beyond the end of the first connecting section, the end of the first connecting section is away from the first surface, thereby reducing the risk of the short circuit.

In some embodiments, the first electrode plate is a negative electrode plate, and the second electrode plate is a positive electrode plate. The first tab is made of a material that includes copper, a copper alloy, nickel, or a nickel alloy. The second tab is made of a material that includes aluminum or an aluminum alloy.

In some embodiments, a cross-sectional area of the second tab is s₃ mm², and s₁ is greater than s₃. Because the first electrode plate accepts or donates electrons through the first tab while the second electrode plate accepts and donates electrons through plenty of conductive sheets and the second tab, it is more difficult for the first tab to dissipate heat compared with a whole formed by the conductive sheets and the second tab. Setting s₁ to be greater than s₃ increases the surface area of the first tab, thereby increasing the heat dissipation speed of the first tab, and in turn, making the heat dissipation more uniform between the first tab and the second tab.

In some embodiments, the first electrode plate further includes a first active material layer disposed on the first current collector. A first recess is disposed in the first active material layer. The first recess exposes the first current collector. The first tab is disposed at the first recess and connected to the first current collector.

According to a second aspect, this application further provides an electronic device. The electronic device includes the electrochemical device described above. Because the electronic device includes the electrochemical device, the electronic device also alleviates the problem of poor consistency between the active material layer of the first electrode plate and the active material layer of the second electrode plate.

### BRIEF DESCRIPTION OF DRAWINGS

To describe the technical solutions in some embodiments of this application more clearly, the following outlines the drawings to be used in the description of the embodiments. Evidently, the drawings outlined below merely illustrate some embodiments of this application, and a person of ordinary skill in the art may obtain other drawings according to the structure shown in the drawings.
FIG. 1 is a schematic diagram of an electrochemical device according to an embodiment of this application;
FIG. 2 is a schematic sectional view of the electrochemical device shown in FIG. 1 and sectioned along a line A-A;
FIG. 3 is a schematic sectional view of the electrochemical device shown in FIG. 1 and sectioned along a line B-B;
FIG. 4 is a schematic sectional view of the electrochemical device shown in FIG. 1 and sectioned along a line C-C;
FIG. 5 is a schematic connection diagram of a first electrode plate and a first tab both in a flattened state;
FIG. 6 is a schematic connection diagram of a second electrode plate in a flattened state; and
FIG. 7 is a schematic diagram of an electronic device according to an embodiment of this application.

### DETAILED DESCRIPTION

For ease of understanding this application, the following describes this application in more detail with reference to drawings and specific embodiments. It is hereby noted that an element referred to herein as being "fixed to" or "fastened to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items enumerated.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

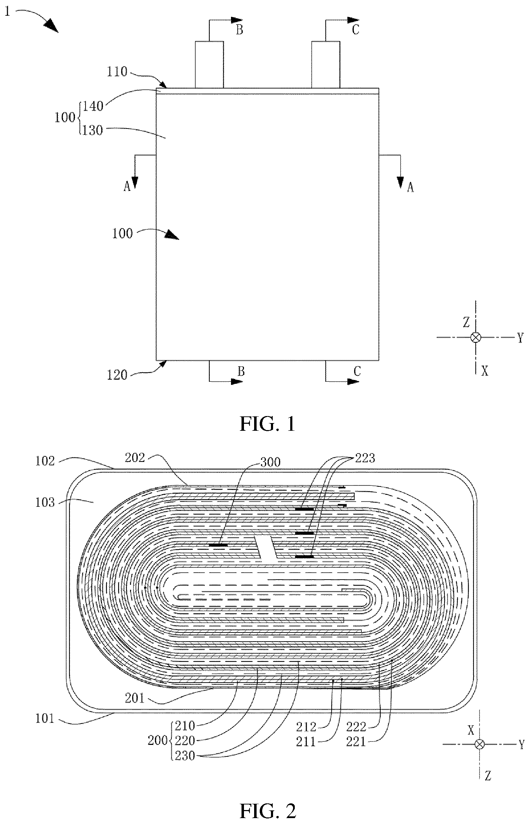

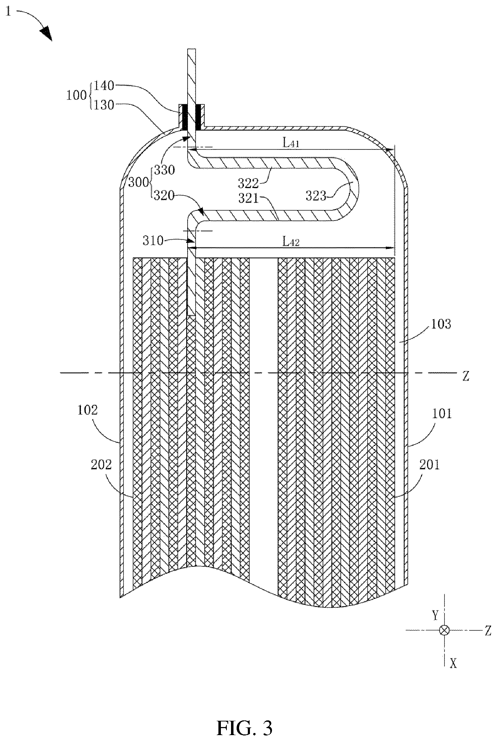

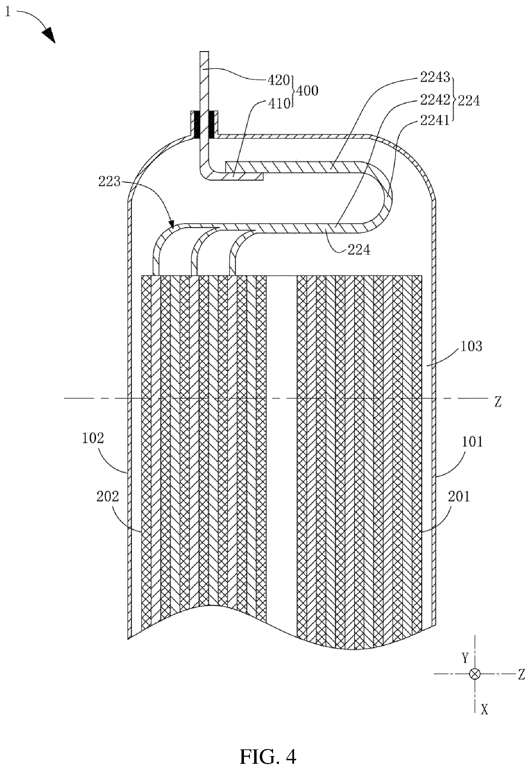

Referring to FIG. 1 to FIG. 4, FIG. 1 is a schematic diagram of an electrochemical device 1 according to an embodiment of this application; FIG. 2 is a schematic sectional view of the electrochemical device 1 sectioned along a line A-A; FIG. 3 is a schematic sectional view of the electrochemical device sectioned along a line B-B; and FIG. 4 is a schematic sectional view of the electrochemical device sectioned along a line C-C. The electrochemical device 1 includes a housing 100, an electrode assembly 200, a first tab 300, and a second tab 400. The housing 100 is configured to mount and support the foregoing structures, and also constitutes a protection structure of the electrochemical device 1. The electrode assembly 200 is accommodated in the housing 100, and includes a first electrode plate 210, a second electrode plate 220, and a separator 230 disposed between the first electrode plate 210 and the second electrode plate 220. The first electrode plate 210, the second electrode plate 220, and the separator 230 are stacked and then wound. The first electrode plate 210 includes a first current collector 211. The second electrode plate 220 includes a second current collector 221 and a plurality of conductive sheets 223 disposed together with the second current collector 221 in one piece. The conductive sheets 223 protrude from the second current collector 221 along a first direction X shown in the drawing. The conductive sheets 223 are stacked in a shown thickness direction Z of the electrode assembly 200 to form a collection portion 224. The first direction X is perpendicular to the thickness direction Z. The first tab 300 is connected to the first current collector 211 and protrudes out of the housing 100. The second tab 400 is connected to the collection portion 224 and protrudes out of the housing 100. The "plurality" mentioned herein means two or more. The following describes the housing 100, the electrode assembly 200, the first tab 300, and the second tab 400.

For the housing 100, referring to FIG. 1 and FIG. 2, the housing 100 is in a box shape that is relatively flat as a whole. The thickness direction of the housing is consistent with the thickness direction Z of the electrode assembly 200. The housing 100 includes a third surface 101 and a fourth surface 102 that are opposite to each other along the thickness direction Z. The housing 100 also includes a first end 110 and a second end 120 disposed opposite to each other. The first end 110 is an end of the housing 100, and the first tab 300 and the second tab 400 protrude from the end of the housing 100. The second end 120 is an end of the housing 100, the end being away from the first tab 300. A direction formed by connecting the first end 110 and the second end 120 is consistent with the first direction X. In addition, an accommodation cavity 103 is disposed inside the housing 100, and is configured to accommodate the electrode assembly 200. A part of the first tab 300, the conductive sheets 223, and a part of the second tab 400.

In this embodiment, the electrochemical device 1 is a pouch-type battery. The housing 100 is made of a flexible sheet, such as an aluminum plastic film. Specifically, referring to FIG. 3 and FIG. 4 together with other drawings, the housing 100 includes a body portion 130 and a sealing portion 140 connected to the body portion 130. An accommodation cavity 103 is disposed in the body portion 130, and the electrode assembly 200 is accommodated in the accommodation cavity 103. The sealing portion 140 is formed by extending the surface of the body portion 130 outward, and is a region for sealing the housing 100 during the shaping of the housing. The first tab 300 and the second tab 400 pass through the sealing portion 140 to protrude out of the housing 100. Understandably, in other embodiments of this application, the electrochemical device 1 may be a hard-shell battery instead. Accordingly, the housing 100 may be made of a hard material, such as a polymer material or a metal material.

For the electrode assembly 200, referring to FIG. 2 together with other drawings, the electrode assembly 200 includes a first electrode plate 210, a second electrode plate 220, and a separator 230 that are stacked. The first electrode plate 210 and the second electrode plate 220 are of opposite polarities, and are separated by the separator 230 in between. The first electrode plate 210, the second electrode plate 220, and the separator 230 wound together, and are wound as a whole to form a columnar structure with oblate end faces. The electrode assembly 200 includes a first surface 201 and a second surface 202 that are disposed opposite to each other along the thickness direction Z. The first surface 201 is disposed close to the third surface 101, and the second surface 202 is disposed close to the fourth surface 102.

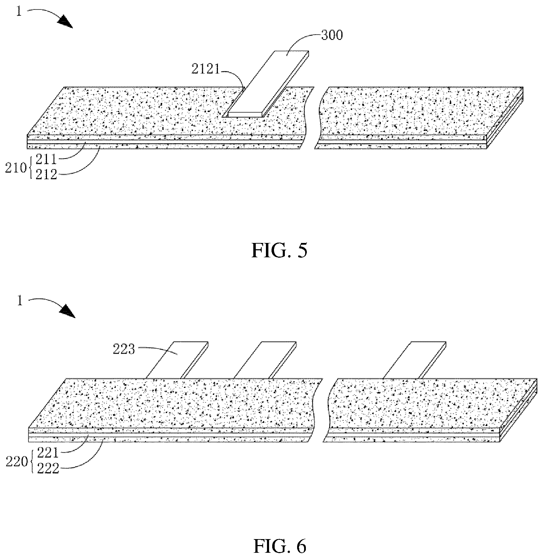

In this embodiment, the first electrode plate 210 is a negative electrode plate, and the second electrode plate 220 is a positive electrode plate. Referring to FIG. 5, which is a schematic connection diagram of the first electrode plate 210 and the first tab 300 both in a flattened state, the first electrode plate 210 includes a first current collector 211 and a first active material layer 212. The first current collector 211 is a base material layer configured to bear the first active material layer 212, and is also a carrier of transferred electrons in the first electrode plate 210. The first active material layer 212 is disposed on the surface of the first current collector 211, and is a carrier of lithium ions intercalated or deintercalated. The first active material layer 212 includes a first recess 2121 to expose the first current collector 211. At the first recess 2121, the first tab 300 is connected to the first current collector 211. Definitely, in other embodiments of this application, the first active material layer 212 may include no first recess 2121. Accordingly, a blank foil region uncoated with the first active material layer 212 is disposed at an end of the first current collector 211. The first current collector 211 is connected to the first tab 300 by the blank foil region.

With respect to the material of the first current collector 211, in some embodiments, the material of the first current collector 211 includes copper, and specifically a copper foil. Understandably, in other embodiments, the first current collector 211 may be made of another appropriate conductive material. For example, in some embodiments, the first current collector 211 includes a copper alloy, nickel, or a nickel alloy. The first active material layer 212 includes a negative active material. For example, in some embodiments, the first active material layer 212 includes graphite, a conductive agent, and a binder. The foregoing materials are mixed and stirred well and applied onto the surface of the first current collector 211 to generate a first active material layer 212.

Referring to FIG. 6, which is a schematic diagram of the second electrode plate 220 in a flattened state, the second electrode plate 220 includes a second current collector 221, a second active material layer 222, and a plurality of conductive sheets 223 that protrude from the second current collector 221 along the first direction X. The second current collector 221 is a base material layer configured to bear the second active material layer 222, and is also a carrier of transferred electrons in the second electrode plate 220. The second active material layer 222 is disposed on the surface of the second current collector 221, and is a carrier of lithium ions intercalated or deintercalated.

With respect to the material of the second current collector 221, in some embodiments, the material of the second current collector 221 includes aluminum, and specifically an aluminum foil. Understandably, in other embodiments, the second current collector 221 may be made of another appropriate conductive material. For example, in some embodiments, the second current collector 221 includes an aluminum alloy, nickel, or a nickel alloy. The second active material layer 222 includes a positive active material. For example, in some embodiments, the second active material layer 222 includes lithium iron phosphate particles, a dispersant, a binder, and a conductive agent. The foregoing materials are mixed and stirred well and applied onto the surface of the second current collector 221 to generate a second active material layer 222.

The conductive sheets 223 are a sheet structure, and is connected to the second current collector 221. The conductive sheets 223 are spaced out along a winding direction of the second electrode plate 220, so as to divide the second electrode plate 220 into a plurality of regions staggered along the winding direction. Still referring to FIG. 4, one end of each conductive sheet 223 is connected to the second current collector 221, and such ends are disposed sequentially along the thickness direction Z. The other end of each conductive sheet 223 is located away from the second electrode plate 220, and such other ends are stacked. The stacked part of the conductive sheets 223 constitutes a first collection portion 224. In this way, the conductive sheets 223 connect the foregoing regions in parallel, thereby reducing the overall internal resistance of the second electrode plate 220 and reducing the heat emission of the second electrode plate 220.

In some embodiments, the conductive sheets 223 are formed together with the second current collector 221 in one piece. In other words, the conductive sheets 223 are formed by extending the edge of the second current collector 221 outward. In the process of making the electrochemical device 1, the surface of the second current collector 221 is coated with the second active material layer 222. Subsequently, a shape shown in FIG. 6 is cut out by die-cutting a part uncoated with the second active material layer 222 on the second current collector 221 by using a cutting device. Afterward, the first electrode plate 210, the separator 230 and the second electrode plate 220 are sequentially stacked and wound, and the conductive sheets 223 are roughly aligned along the thickness direction. Afterward, the ends that are of the conductive sheets 223 and that are located away from the second electrode plate 220 are stacked and welded fixedly to form the electrode assembly 200 shown in FIG. 2 to FIG. 4. Understandably, in other embodiments of this application, the conductive sheets 223 and the second current collector may be formed separately instead, and connected by welding or other means, without being limited in this application.

In some embodiments, the collection portion 224 is U-shaped on the whole, and includes a first extension section 2241, a second extension section 2242, and a third extension section 2243 that are connected in sequence. Along an extension path of the collection portion 224, the first extension section 2241 is a part of the collection portion 224, the part of the collection portion 224 is close to the second electrode plate 220. The third extension section 2243 is a part of the collection portion 224, the part of the collection portion 224 is away from the second electrode plate 220. Along the first direction X, the first extension section 2241 is opposite to the third extension section 2243, and the first extension section 2241 is located between the electrode assembly 200 and the third extension section 2243. The second extension section 2242 is connected to the first extension section 2241 and the third extension section 2243 separately. In this way, the first extension section 2241, the second extension section 2242, and the third extension section 2243 close in together to form a U-shaped structure. Understandably, notwithstanding that the collection portion 224 in this embodiment extends in a U-shape, the collection portion 224 in other embodiments of this application may extend in any other shape such as a rectilinear or arc shape, without being particularly limited in this application.

For the first tab 300, still referring to FIG. 5 together with FIG. 3, one end of the first tab 300 is connected to the electrode assembly 200, and the other end extends out of the housing 100 along the first direction X, thereby constituting a conductive terminal of the electrochemical device 1. The conductive terminal is configured to be connected to an external electrical load. The first tab 300 is a sheet structure extending in a bent shape as a whole, and includes a first portion 310, a second portion 320, and a third portion 330 that are connected in sequence. The following describes the first portion 310, the second portion 320, and the third portion 330 with reference to FIG. 3.

The first portion 310 is connected to the first electrode plate 210, and is in a flat shape as a whole, and extends along the first direction X. The first portion 310 is located at the first recess 2121, and is fixed to the first current collector 211 by welding.

The second portion 320 is located outside the first electrode plate 210, and is disposed in a bent shape. One end of the second portion 320 is connected to the first portion 310, and the other end is connected to the third portion 330. In this embodiment, the second portion 320 is U-shaped on the whole, and includes a first connecting section 321, a second connecting section 322, and a bend section 323. One end of the first connecting section 321 is connected to the first portion 310, and the other end extends toward the first surface 201. One end of the bend section 323 is connected to an end of the first connecting section 321, the end of the first connecting section 321 is oriented toward the first surface 201. The bend section is bent away from the electrode assembly 200 against the first connecting section 321. Along the first direction X, the second connecting section 322 is located on a side of the first connecting section 321, the side of the first connecting section 321 is away from the electrode assembly 200, and the second connecting section 322 is disposed opposite to the first connecting section 321 along the first direction X. One end of the second connecting section 322 is connected to the end of the bend section 323, the end of the bend section 323 is away from the first connecting section 321. The other end of the second connecting section 322 extends away from the first surface 201. In other words, an end of the second connecting section 322, which is away from the third portion 330, is indirectly connected to the first connecting section 321 by the bend section 323. In this way, the first connecting section 321, the bend section 323, and the second connecting section 322 together form a U-shaped structure.

Understandably, although in this embodiment, the second portion 320 includes the first connecting section 321, the bend section 323, and the second connecting section 322 simultaneously and the three sections form a U-shaped structure, this application is not limited to such a structure, and any structure that ensures the second portion 320 to be in a bent shape is appropriate. For example, in some other embodiments of this application, the second connecting section 322 of the second portion 320 is directly connected to the first connecting section 321. In this case, the second portion 320 is of a V-shaped structure. Put differently, in some circumstances, the bend section 323 is omissible. As another example, in some other embodiments of this application, the second portion 320 includes two V-shaped structures mentioned above. The two V-shaped structures are connected in sequence, so that the second portion 320 is continuously bent.

The third portion 330 is flat as a whole. One end of the third portion 330 is connected to an end of the second portion 320, the end of the second portion 320 is away from the first portion 310. The other end of the third portion 330 extends out of the housing 100. When the first tab 300 is impacted, the first tab 300 can remove at least a part of the impact force on the first tab 300 by virtue of elastic deformation of the second portion 320, so as to reduce the impact force finally transmitted to the first portion 310 and effective on a connection region between the first portion 310 and the first electrode plate 210.

In some embodiments, a sharp-corner transition between the first portion 310, the second portion 320, and the third portion 330 needs to be avoided because the sharp-corner transition leads to stress concentration in the connection region between the foregoing three portions of the first tab 300, and affects mechanical properties of the first tab 300. To avoid the sharp-corner transition, the second portion 320 includes a rounded corner at an end close to the first portion 310, and is connected to the first portion 310 by the rounded corner. The second portion 320 includes a rounded corner at an end close to the third portion 330, and is connected to the third portion 330 by the rounded corner.

In some embodiments, the electrochemical device 1 satisfies: L₄₁/L₄₂ ≤ 1.1. Viewed along the second direction Y, an end of the third portion 330 which is close to the second portion 320 on a side away from the first surface 201 is at a distance of L₄₁ mm from the first surface 201 along the thickness direction Z. The side of the first portion 310 which is away from the first surface 201 is at a distance of L₄₂ mm from the first surface 201 along the thickness direction Z. A person skilled in the art is able to obtain a distance between a left side of a lower end of the third portion 330 and the first surface 201 in FIG. 3 by taking a CT image of the electrochemical device 1 along the second direction Y and then measuring the distance with a CT device or instrument, and the distance is L₄₁. A person skilled in the art is able to obtain a distance between a left side of the first portion 310 and the first surface 201 in FIG. 3 by taking a CT image of the electrochemical device 1 along the second direction Y and then measuring the distance with a CT device or instrument, and the distance is L₄₂.

When the first tab 300 is subjected to an external force along the shown first direction X or bears a component force along the first direction X, the second connecting section 322 bends toward the electrode assembly 200. If, in the thickness direction Z, the end of the second connecting section 322, which is away from the first surface 201, goes clearly beyond the end of the first connecting section 321 which is away from the first surface 201, then the end of the second connecting section 322 which is away from the first surface 201 may be inserted upside down until touching the second electrode plate 220 in the electrode assembly 200, thereby causing a short circuit in the electrochemical device 1. Setting the L₄₁/L₄₂ ratio to a value less than or equal to 1.1 is intended to make the end of the second connecting section 322 which is away from the first surface 201, not go beyond the end of the first connecting section 321 which is away from the first surface 201, or just slightly go beyond the end of the first connecting section 321 which is away from the first surface 201, thereby reducing the risk of the short circuit.

It is hereby noted that the shape of the first tab 300 is not particularly limited in this application, and may be a continuously bent shape as in the above embodiment, or a rectilinear extension shape.

For the second tab 400, referring to FIG. 4 together with other drawings, one end of the second tab 400 is connected to the collection portion 224, and the other end extends out of the housing 100 through the first end 110, thereby constituting another conductive terminal of the electrochemical device 1. The conductive terminal is configured to be connected to an external electrical load. In this embodiment, the second tab 400 includes a fourth portion 410 and a fifth portion 420. The fourth portion 410 overlaps the third extension section 2243. The fifth portion 420 is at a bent angle to the fourth portion 410, and extends in a straight line. One end of the fifth portion 420 is connected to the fourth portion 410, and the other end extends out of the housing 100 along the first direction X.

In some embodiments, the cross-sectional area of a cross section of the first tab 300 perpendicular to an extension path of the first tab is s₁ mm², the cross-sectional area of a cross section of the second tab 400 perpendicular to an extension path of the second tab is s₃ mm², and the first tab 300 and the second tab 400 satisfy s₁ > s₃. Because the first electrode plate 210 accepts or donates electrons through the first tab 300 while the second electrode plate 220 accepts and donates electrons through plenty of conductive sheets 223 and the second tab 400, it is more difficult for the first tab 300 to dissipate heat compared with a whole formed by the conductive sheets 223 and the second tab 400. Setting s₁ to be greater than s₃ increases the surface area of the first tab 300, thereby increasing the heat dissipation speed of the first tab, and in turn, making the heat dissipation more uniform between the first tab 300 and the second tab 400.

The first electrode plate 210 accepts or donates electrons through the first tab 300 while the second electrode plate 220 accepts or donates electrons through a plurality of conductive sheets 223 connected in parallel. The difference in the flow capacity between the first tab 300 and the plurality of conductive sheets 223 leads to a difference in the heat emission between the first tab and the conductive sheets. Therefore, the temperature increment differs between the first tab 300 and the conductive sheets 223 during use of the electrochemical device 1. The inconsistency between the temperature increment of the first tab and the temperature increment of the conductive sheets reduces the consistency between the first active material layer 212 and the second active material layer 222, and in turn, deteriorates the performance of the electrochemical device 1, for example, reduces the cycle capacity retention rate of the electrochemical device.

For ease of understanding the subsequent experimental data, the following describes the relevant terms or parameters:

The term "cycle capacity retention rate" mentioned herein means a ratio (%) of the capacity of a fresh electrochemical device 1 at the end of several charge-and-discharge cycles to a discharge capacity of the electrochemical device 1 in a first-cycle test. The term "400^{th}-cycle capacity retention rate" mentioned herein means a ratio of the capacity of a fresh electrochemical device 1 at the end of 400 charge-and-discharge cycles to a discharge capacity of the electrochemical device in a first-cycle charge-and-discharge test.

The conductivity of the first tab 300 is g₁ S/mm. The values of the conductivity may be looked up in technical data according to the type of the material, or the conductivity of a given material may be measured according to the national/industrial standard. In this embodiment, the first tab 300 is made of copper, and therefore, g₁ = 57000. Definitely, in other embodiments of this application, the first tab 300 may be made of other materials, and g₁ changes accordingly.

The cross-sectional area of a cross section of the first tab 300 perpendicular to an extension direction of the first tab is s₁ mm². In this embodiment, the first tab 300 is a sheet structure that is uniform in both width and thickness, b₁ mm in width, and c₁ mm in thickness. Therefore, by measuring the width b₁ and thickness c₁ of the first tab 300, the cross-sectional area of the first tab 300 can be calculated with reference to an area calculation formula.

The conductivity of the conductive sheets 223 is g₂ S/mm. In this embodiment, the conductive sheets 223 are formed together with the second current collector 221 in one piece, both being made of aluminum. Therefore, g₂ = 28600. Definitely, in other embodiments of this application, the conductive sheets 223 may be made of other materials, and g₂ changes accordingly.

The sum of cross-sectional areas of cross sections of the conductive sheets 223 perpendicular to an extension direction of the conductive sheets is s₂ mm². In this embodiment, the conductive sheets 223 are uniform in both width and thickness, b₂ mm in width, and c₂ mm in thickness. Therefore, by measuring the width b₂, thickness c₂, and the number N of the conductive sheets 223, the sum of the cross-sectional areas of the conductive sheets 223 can be calculated according to an area calculation formula. If the conductive sheets 223 are not uniform in width or thickness, the cross-sectional area of each conductive sheet 223 is calculated separately, and the cross-sectional areas of all the conductive sheets 223 are summed.

The conductivity of the first current collector 211 is g₃ S/mm. In this embodiment, the first current collector is made of copper, and therefore, g₃ = 57000. Definitely, in other embodiments of this application, the first current collector may be made of other materials, and g₃ changes accordingly.

The welding area between the first tab 300 and the first electrode plate 210 is a₁ mm². In fact, the welding area may be measured in various ways. For example, in some embodiments, the first tab 300 is spot-welded to the first current collector, and therefore, the first tab 300 may be separated from the first current collector 211 first, and then the welding face is placed under a microscope. The microscope is adjusted until the spot-welding region is clearly distinguishable from the non-spot-welding region, and then the welding region is photographed. The frame of the welding region is delineated by graphics software, and the area of each spot-welding region is calculated. The areas of all spot-welding regions add up to the welding area. For example, in some other embodiments, the first tab 300 is welded to the first current collector 211 by pull-welding such as tin-soldering, in which only one welding region exists. Therefore, the first tab 300 may be separated from the first current collector first, and then the welding face is placed under a microscope. The microscope is adjusted until the welding region is clearly distinguishable from the non-welding region, and then the welding region is photographed. The frame of the welding region is delineated by graphics software, and the area of the welding region is calculated.

The conductivity of the second tab 400 is g₄ S/mm. In this embodiment, the second tab 400 is made of aluminum, and therefore, g₄ = 28600. Definitely, in other embodiments of this application, the second tab 400 may be made of other materials, and g₄ changes accordingly.

The welding area between the second tab 400 and the collection portion 224 is a₂ mm². The method for measuring the welding area may be obtained by reference to the method for measuring the welding area between the first tab 300 and the first current collector as described above, and is omitted herein.

Under a 25 °C environment, a current intensity for discharging the electrochemical device 1 at a constant current from a 100 % state of charge (SOC) to a 0% SOC within 1 hour is I mA. In other words, if the capacity of the electrochemical device 1 is 4500 mAh, I is 4500. In addition, the corresponding I value of the electrochemical device 1 may be obtained by discharging the electrochemical device 1 under the above conditions.

In this application, the electrochemical device 1 satisfies 0.8 ≤ (g₁ × s₁)/(g₂ × s₂) ≤ 1.2. The flow capacity of the first tab 300 is positively correlated with the conductivity g₁ and the cross-sectional area s₁ of the first tab. Therefore, (g₁×s₁) represents the flow capacity of the first tab 300. Similarly, (g₂×s₂) represents the overall flow capacity of all conductive sheets 223. The following describes, with reference to experimental data, how the difference in the flow capacity between the first tab 300 and the whole conductive sheets 223 affects the cycle capacity retention rate of the electrochemical device 1.

Referring to Table 1, which shows the test results of the temperature increment and the cycle capacity of the electrochemical device 1 compared between different embodiments.

A method for measuring the temperature increment in Table 1 includes the following steps:

S501: Charge an electrochemical device 1 to 100% SOC in a 25 °C±2 °C environment.

S502: Leave the electrochemical device 1 to stand for 120 minutes to make the temperature of the electrochemical device be equal to the ambient temperature.

S503: Stick a temperature sensor onto a first tab 300, and stick another temperature sensor onto a second tab 400. Considering that the temperature of the conductive sheets 223 is not conveniently measurable and the second tab 400 is connected to the conductive sheets 223, this method indirectly measures the temperature of the conductive sheets 223 by measuring the temperature of the second tab 400.

S504: Discharge the electrochemical device 1 to a 0% SOC at a current of 1.5 I.

S505: Record a maximum value of the temperature differences measured by the two temperature sensors at the same time, and input the data into Table 1.

A method for measuring the 400^{th}-cycle capacity retention rate includes the following steps:
S601: Charge an electrochemical device 1 at a current of 0.5 I in a 25 °C±2 °C environment until a 100% SOC.
S602: Leave the electrochemical device 1 to stand for 10 minutes.
S603: Discharge the electrochemical device 1 to a 0% SOC at a current of 1 I.
S604: Record the first-cycle discharge capacity Q₁ of the electrochemical device 1.
S605: Repeat steps S601 to S604 for 400 cycles.
S606: Record the 400^{th}-cycle discharge capacity Q₂ of the electrochemical device 1.
S607: Calculate the 400^{th}-cycle capacity retention rate ΔQ according to this formula: ΔQ = Q₂/Q₁.

Referring to Embodiments 1 to 4 first. The main difference in the electrochemical device 1 between the four embodiments lies in the cross-sectional area s₁ of the first tab 300, and other parameters such as the conductivity g₁ of the first tab, the sum s₂ of the cross-sectional areas of the conductive sheets 223, and the conductivity g₂ of the conductive sheets 223 are the same. Therefore, the flow capacity ratio of the electrochemical device 1 differs between the embodiments accordingly.

As can be seen with reference to Embodiments 1 to 4, when the flow capacity ratio satisfies (g₁ × s₁)/(g₂ × s₂) < 0.8, the temperature increment difference between the first tab 300 and the second tab 400 is greater than 5 °C, and the 400^{th}-cycle capacity retention rate of the electrochemical device 1 is less than 85%.

Referring to Embodiment 1 and Embodiments 5 to 7. The main difference in the electrochemical device 1 between the four embodiments lies in the width of the conductive sheets 223, that is, the sum s₂ of the cross-sectional areas of the conductive sheets 223. Other parameters such as cross-sectional area s₁ of the first tab 300, the conductivity g₁ of the first tab, and the conductivity g₂ of the conductive sheets 223 are the same. Therefore, the flow capacity ratio of the electrochemical device 1 differs between the embodiments accordingly.

As can be seen with reference to Embodiment 1 and Embodiments 5 to 7, when the flow capacity ratio satisfies (g₁ × s₁)/(g₂ × s₂) > 1.2, the temperature increment difference between the first tab 300 and the second tab 400 is greater than 5 °C, and the 400^{th}-cycle capacity retention rate of the electrochemical device 1 is less than 85%.

As can be seen with reference to Embodiments 1 to 9, when the flow capacity ratio satisfies 0.8 ≤ (g₁ × s₁)/(g₂ × s₂) ≤ 1.2, the temperature increment difference between the first tab 300 and the second tab 400 is less than 5 °C. Therefore, the consistency of the active material layer between the first electrode plate 210 and the second electrode plate 220 is still relatively high after 400 charge-and-discharge cycles, and the 400^{th}-cycle capacity retention rate of the electrochemical device 1 is still higher than 85%.

As can be seen with reference to Embodiments 1, 8, and 9, although both (g₁×s₁) and (g₂×s₂) have changed, as long as the ratio between them remains unchanged, the temperature increment between the first tab 300 and the second tab 400 as well as the 400^{th}-cycle capacity retention rate of the electrochemical device 1 are not significantly different between such embodiments.

**Table 1 Temperature increment and cycle capacity of electrochemical device compared between different embodiments**

| Embodiment | Width b₁ of first tab (mm) | Thickness c₁ of first tab (mm) | Cross-sectional area s₁ of first tab (mm²) | Width b₂ of conductive sheets (mm) | Thickness c₂ of conductive sheets (mm) | Number of conductive sheets (N) | Sum s₂ of cross-sectional areas of conductive sheets (mm²) | (g₁×s₁)/(g₂×s₂) | Discharge temperature difference between first tab and second tab (°C) | 400^{th}-cycle capacity retention rate |
|---|---|---|---|---|---|---|---|---|---|---|
| Embodiment 1 | 5 | 0.358 | 1.79 | 11 | 0.013 | 20 | 2.86 | 1.0 | 1 | 88.0% |
| Embodiment 2 | 5 | 0.322 | 1.61 | 11 | 0.013 | 20 | 2.86 | 0.9 | 2 | 87.4% |
| Embodiment 3 | 5 | 0.286 | 1.43 | 11 | 0.013 | 20 | 2.86 | 0.8 | 4 | 87.1% |
| Embodiment 4 | 5 | 0.25 | 1.25 | 11 | 0.013 | 20 | 2.86 | 0.7 | 7 | 84.0% |
| Embodiment 5 | 5 | 0.358 | 1.79 | 10 | 0.013 | 20 | 2.60 | 1.1 | -1 | 87.6% |
| Embodiment 6 | 5 | 0.358 | 1.79 | 9.17 | 0.013 | 20 | 2.38 | 1.2 | -3 | 87.1% |
| Embodiment 7 | 5 | 0.358 | 1.79 | 8.46 | 0.013 | 20 | 2.20 | 1.3 | -7 | 84.3% |
| Embodiment 8 | 4 | 0.447 | 1.79 | 11 | 0.013 | 20 | 2.86 | 1.0 | 1 | 88.1% |
| Embodiment 9 | 3 | 0.596 | 1.79 | 11 | 0.013 | 20 | 2.86 | 1.0 | 1 | 88.1% |

In addition, the temperature difference between the first tab 300 and the conductive sheets 223 is not only affected by the conductivity g₁ of the first tab 300, the conductivity g₂ of the second tab 400, the cross-sectional area s₁ of the first tab 300, and the sum s₂ of cross-sectional areas of conductive sheets 223, but also limited by the area of the welding region of the first tab 300. For example, if the welding area of the first tab 300 is unduly small, the temperature rise of the welding region will be faster than that of the first tab 300. Consequently, the temperature increment of the first tab 300 increases accordingly, that is, the temperature rise of the first tab 300 is faster than that of the conductive sheets 223. Similarly, the temperature difference between the first tab 300 and the conductive sheets 223 is also limited by the area of the welding region of the second tab 400. For example, if the welding area of the second tab 400 is unduly small, the temperature rise of the welding region will be faster than that of the conductive sheets 223. Consequently, the temperature increment of the conductive sheets 223 increases accordingly, that is, the temperature rise of the conductive sheets 223 is faster than that of the first tab 300.

In this application, in order to ensure a relatively small temperature increment difference between the conductive sheets 223 and the welding region that is welded between the first tab 300 and the first electrode plate 210, the electrochemical device 1 satisfies: min(g₁, g₃) × a₁/(g₂ × s₂) ≥ 0.8. By analogy, in order to further ensure a relatively small temperature increment difference between the conductive sheets 223 and the welding region that is welded between the first tab 300 and the first electrode plate 210, the electrochemical device 1 further satisfies: min(g₂, g₄) × a₂/(g₂ × s₂) ≥ 0.8.

Specifically, referring to Table 2, which shows the test results of the temperature increment of the electrochemical device 1 compared between different embodiments, the main difference of the electrochemical device 1 between the embodiments lies in the welding area between the first tab 300 and the first electrode plate 210. This test aims to indirectly control the change of the flow capacity ratio by controlling the change of the welding area, and, according to the test results of the temperature increment, examine how the flow capacity ratio is related to the temperature increment difference between the welding region and the conductive sheets 223. In this experiment, both the first tab 300 and the first current collector 211 are made of copper, and therefore, min(g₁, g₃) = 57000. Both the conductive sheets 223 and the second tab 400 are made of aluminum, and therefore, min(g₂, g₄) = 28600. In this application, min(gₘ, gₙ) means gₘ or gₙ, whichever is the minimum.

As can be seen with reference to Embodiments 10 to 16, when min(g₁, g₃) × a₁/(g₂ × s₂) is less than 0.8, the temperature increment difference between the first tab 300 and the second tab 400 is greater than 5 °C, and the 400^{th}-cycle capacity retention rate of the electrochemical device 1 is less than 85%. When min(g₁, g₃) × a₁/(g₂ × s₂) is greater than or equal to 0.8, the temperature increment difference between the welding region of the first tab 300 and the second tab 400 is less than 5 °C, and the 400^{th}-cycle capacity retention rate of the electrochemical device 1 is higher than 85%.

As can be seen with reference to Embodiments 17 to 22, when min(g₂, g₄) × a₂/(g₂ × s₂) is less than 0.8, the temperature increment difference between the first tab 300 and the second tab 400 in the electrochemical device 1 is greater than 5 °C, and the 400^{th}-cycle capacity retention rate of the electrochemical device 1 is less than 85%. When min(g₂, g₄) × a₂/(g₂ × s₂) is greater than or equal to 0.8, the temperature increment difference between the first tab 300 and the second tab 400 is less than 5 °C, and the 400^{th}-cycle capacity retention rate of the electrochemical device 1 is higher than 85%.

**Table 2 Temperature increment of electrochemical device 1 compared between different embodiments**

| Embodiment | Welding area a₁ between first tab and first electrode plate (mm²) | Welding area a₂ between second tab and collection portion (mm²) | min(g₁, g₃)×a₁/(g₂×s₂) | min(g₂, g₄)×a₂/(g₂×s₂) | Discharge temperature difference between first tab and second tab (°C) | 400^{th}-cycle capacity retention rate |
|---|---|---|---|---|---|---|
| Embodiment 10 | 2.3 | 2.86 | 1.3 | 1.0 | 0.5 | 87.9% |
| Embodiment 11 | 2.0 | 2.86 | 1.1 | 1.0 | 0 | 88.0% |
| Embodiment 12 | 1.8 | 2.86 | 1.0 | 1.0 | -0.5 | 88.1% |
| Embodiment 13 | 1.6 | 2.86 | 0.9 | 1.0 | 2 | 87.2% |
| Embodiment 14 | 1.4 | 2.86 | 0.8 | 1.0 | 4 | 86.9% |
| Embodiment 15 | 1.3 | 2.86 | 0.7 | 1.0 | 7 | 83.9% |
| Embodiment 16 | 1.1 | 2.86 | 0.6 | 1.0 | 12 | 80.0% |
| Embodiment 17 | 1.8 | 3.15 | 1.0 | 1.1 | 1 | 87.9% |
| Embodiment 18 | 1.8 | 3.72 | 1.0 | 1.3 | 1.5 | 88.0% |
| Embodiment 19 | 1.8 | 2.57 | 1.0 | 0.9 | -1 | 87.7% |
| Embodiment 20 | 1.8 | 2.29 | 1.0 | 0.8 | -3 | 87.1% |
| Embodiment 21 | 1.8 | 2.00 | 1.0 | 0.7 | -5.5 | 84.0% |
| Embodiment 22 | 1.8 | 1.72 | 1.0 | 0.6 | -11 | 80.4% |

In addition, considering that heat dissipation is more difficult in the middle part of the electrochemical device 1, the temperature increment also differs between the main part of the electrochemical device 1, the first tab 300, and the conductive sheets 223 during the use of the electrochemical device 1. The temperature increment difference also affects the 400^{th}-cycle capacity retention rate of the electrochemical device to some extent.

Referring to Table 3, which shows the test results of the temperature increment of the electrochemical device 1 compared between different embodiments, among the electrochemical devices 1 prepared in different embodiments, the flow capacity of an aggregate of the conductive sheets 223 is roughly identical to the flow capacity of the first tab 300. Specifically, the electrochemical device satisfies 0.95 ≤ (g₁ × s₁)/(g₂ × s₂) ≤ 1.05. The main difference of the electrochemical device 1 between different embodiments lies in the flow capacity of the first tab 300 and the flow capacity of the overall structure formed by the conductive sheets 223. This test aims to examine, by controlling the change of the flow capacity of the first tab 300 and by reference to the test results of the temperature increment, how the temperature difference between the main part of the electrochemical device 1 and the first tab 300 (second tab 400) is related to the flow capacity of the first tab 300 (second tab 400).

In this application, the electrochemical device satisfies 1.4 ≤ (g₁ × s₁)/I ≤ 2.8. Specifically, as can be seen with reference to Embodiments 23 to 26, when (g₁×s₁)/I is less than 1.4, the temperature increment difference between the body portion 130 of the electrochemical device 1 and the first tab 300 is greater than 5 °C. When (g₁×s₁)/I is greater than or equal to 1.4, the temperature increment difference between the body portion 130 of the electrochemical device 1 and the first tab 300 is less than 5 °C. However, when (g₁×s₁)/I is greater than 2.8, the temperature increment difference between the body portion 130 of the electrochemical device 1 and the first tab 300 is less than 1 °C, indicating that under this condition, the temperature increment difference is extremely small and further increase of the flow capacity of the first tab 300 is not much significant but increases the manufacturing cost of the first tab 300. The setting of 1.4 ≤ (g₁×s₁)/I ≤ 2.8 ensures a sufficient flow capacity of the first tab 300, and therefore, ensures that the temperature increment difference between the main region and the first tab 300 is relatively small, ensures that the 400^{th}-cycle capacity retention rate of the electrochemical device 1 is still high, and also ensures that the manufacturing cost of the first tab 300 remains relatively low.

**Table 3 Temperature increment of electrochemical device 1 compared between different embodiments**

| Embodiment | Width b₁ of first tab (mm) | Thickness c₁ of first tab (mm) | Cross-sectional area s₁ of first tab (mm²) | Width b₂ of conductive sheets (mm) | Thickness c₂ of conductive sheets (mm) | Number of conductive sheets (N) | Sum s₂ of cross-sectional areas of conductive sheets (mm²) | (g₁×s₁)/(g₂×s₂) | (g₁×s₁)/I | Discharge temperature difference between first tab and body portion (°C) | 400^{th}-cycle capacity retention rate |
|---|---|---|---|---|---|---|---|---|---|---|---|
| Embodiment 23 | 4.7 | 0.358 | 1.68 | 10.4 | 0.013 | 20 | 2.70 | 1.01 | 2.1 | 2 | 88.0% |
| Embodiment 24 | 6.3 | 0.358 | 2.26 | 13.9 | 0.013 | 20 | 3.61 | 1.02 | 2.8 | 0.5 | 89.1% |
| Embodiment 25 | 3.2 | 0.358 | 1.15 | 7.0 | 0.013 | 20 | 1.82 | 1.03 | 1.4 | 4.5 | 87.6% |
| Embodiment 26 | 1.6 | 0.358 | 0.57 | 3.5 | 0.013 | 20 | 0.91 | 1.03 | 0.7 | 10 | 81.3% |
| Embodiment 27 | 7.0 | 0.358 | 2.51 | 15.4 | 0.013 | 20 | 4.00 | 1.02 | 3.2 | 0.5 | 89.1% |

To sum up, the electrochemical device 1 according to an embodiment of this application includes a housing 100, an electrode assembly 200, a first tab 300, and a second tab 400. The electrode assembly 200 is accommodated in the housing 100 and includes a first electrode plate 210, a second electrode plate 220, and a separator 230. The first electrode plate 210 includes a first current collector 211. The second electrode plate 220 includes a second current collector 221 and a plurality of conductive sheets 223 disposed together with the second current collector 221 in one piece. The plurality of conductive sheets 223 protrude from the second current collector 221 along the first direction X. The plurality of conductive sheets 223 are stacked in the thickness direction of the electrode assembly 200 to form a collection portion 224. The first tab 300 is connected to the first current collector 211, and the second tab 400 is connected to the collection portion 224.

The electrochemical device 1 according to this embodiment of this application satisfies: 0.8 ≤ (g₁ × s₁)/(g₂ × s₂) ≤ 1.2. This setting ensures that the temperature increment difference between the first tab 300 and the conductive sheets 223 is relatively small, and therefore, the consistency between the active material layer of the first electrode plate 210 and the active material layer of the second electrode plate 220 is still relatively high after 400 charge-and-discharge cycles, and the 400^{th}-cycle capacity retention rate of the electrochemical device 1 is still relatively high.

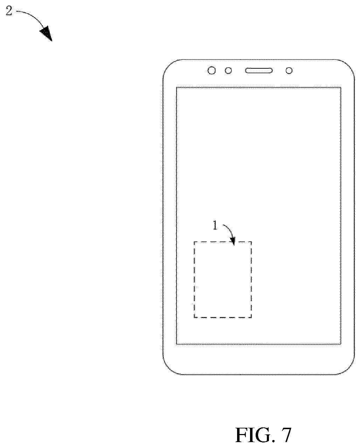

Based on the same inventive concept, this application further provides an electronic device. Referring to FIG. 7, which is a schematic diagram of an electronic device 2 according to an embodiment of this application, the electronic device includes the electrochemical device 1 according to the foregoing embodiment and a load structure powered by the electrochemical device 1. In this embodiment, the electronic device 2 includes a mobile phone. Understandably, in other embodiments of this application, the electronic device may be a tablet computer, a computer, an unmanned aerial vehicle, or any other electrically powered devices.

Because the electronic device includes the electrochemical device, the electronic device also alleviates the problem of poor consistency between the active material layer of the first electrode plate and the active material layer of the second electrode plate.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. An electrochemical device (1), comprising:
a housing (100);
an electrode assembly (200) accommodated in the housing (100); the electrode assembly (200) comprising a first electrode plate (210), a second electrode plate (220) and a separator (230) disposed between the first electrode plate (210) and the second electrode plate (220); wherein the first electrode plate (210), the second electrode plate (220), and the separator (230) are stacked and then wound; the first electrode plate (210) comprises a first current collector (211); the second electrode plate (220) comprises a second current collector (221) and a plurality of conductive sheets (223) disposed together with the second current collector (221) in one piece; and the plurality of conductive sheets (223) protrude from the second current collector (221) along a first direction (X), the plurality of conductive sheets (223) are stacked in a thickness direction (Z) of the electrode assembly (200) to form a collection portion (224), and the first direction (X) is perpendicular to the thickness direction (Z);
a first tab (300), connected to the first current collector (211) and protruding out of the housing (100); and
a second tab (400), connected to the collection portion (224) and protruding out of the housing (100), wherein
a conductivity of the first tab (300) is g₁ S/mm,
a cross-sectional area of the first tab (300) perpendicular to an extension path of the first tab (300) is s₁ mm²,
a conductivity of the plurality of conductive sheets (223) is g₂ S/mm,
a sum of cross-sectional areas of the plurality of conductive sheets (223) perpendicular to an extension direction of the conductive sheets (223) is s₂ mm², and 0.8 ≤ (g₁ × s₁)/(g₂ × s₂) ≤ 1.2.

2. The electrochemical device (1) according to claim 1, **characterized in that**,
the first tab (300) is welded to the first current collector (211), a conductivity of the first current collector (211) is g₃ S/mm, a welding area between the first tab (300) and the first current collector (211) is a₁ mm², and min(g₁, g₃) × a₁/(g₂ × s₂) ≥ 0.8; and/or
the second tab (400) is welded to the collection portion (224), a conductivity of the second tab (400) is g₄ S/mm, a welding area between the second tab (400) and the collection portion (224) is a₂ mm², and min(g₂, g₄) × a₂/(g₂ × s₂) ≥ 0.8.

3. The electrochemical device (1) according to any one of claims 1 or 2, **characterized in that**, the first tab (300) comprises a first portion (310), a second portion (320), and a third portion (330) connected in sequence; and
the first portion (310) is connected to the first current collector (211), the second portion (320) is located outside the first current collector (211) and disposed in a bent shape, and the third portion (330) protrudes from the housing (100).

4. The electrochemical device (1) according to claim 3, **characterized in that**, the electrode assembly (200) comprises a first surface (201) and a second surface (202) opposite to each other in the thickness direction (Z);
the second portion (320) comprises a first connecting section (321) and a second connecting section (322);
one end of the first connecting section (321) being connected to the first portion (310) and an other end of the first connecting section (321) extending toward the first surface (201); and
the second connecting section (322) is located on a side of the first connecting section (321);
wherein one end of the second connecting section (322) is connected to an end of the first connecting section (321) and an other end of the second connecting section (322) is connected to an end of the third portion (330).

5. The electrochemical device (1) according to claim 4, **characterized in that**, the second portion (320) further comprises a bend section (323);
one end of the bend section (323) is connected to the end of the first connecting section (321) and an other end of the bend section (323) is connected to the one end of the second connecting section (322).

6. The electrochemical device (1) according to claim 4, **characterized in that**,
in the thickness direction (Z), a distance between the first surface (201) and an end of the third portion (330) away from the first surface (201) is L₄₁ mm;
in the thickness direction (Z), a distance between the first surface (201) and an end of the first portion (310) away from the first surface (201) is L₄₂ mm, and
an L₄₁/L₄₂ ratio is less than or equal to 1.1.

7. The electrochemical device (1) according to any one of claims 1 to 6, **characterized in that**, the first electrode plate (210) is a negative electrode plate, and the second electrode plate (220) is a positive electrode plate; and
the first tab (300) is made of a material comprising copper, a copper alloy, nickel, or a nickel alloy; and the second tab (400) is made of a material comprising aluminum or an aluminum alloy.

8. The electrochemical device (1) according to any one of claims 1 to 7, **characterized in that**, a cross-sectional area of the second tab (400) perpendicular to an extension path of the second tab (400) is s₃ mm², and s₁ is greater than s₃.

9. The electrochemical device (1) according to any one of claims 1 to 8, **characterized in that**, the first electrode plate (210) further comprises a first active material layer (212) disposed on the first current collector (211), a first recess (2121) is disposed in the first active material layer (212), the first recess (2121) exposes the first current collector (211), and the first tab (300) is disposed at the first recess (2121) and connected to the first current collector (211).

10. An electronic device (2), **characterized in that**, the electronic device (2) comprises the electrochemical device (1) according to any one of claims 1 to 9.

## Patentansprüche

1. Elektrochemische Vorrichtung (1), umfassend:
ein Gehäuse (100);
eine Elektrodenbaugruppe (200), die in dem Gehäuse (100) untergebracht ist; wobei die Elektrodenbaugruppe (200) eine erste Elektrodenplatte (210), eine zweite Elektrodenplatte (220) und einen Separator (230) umfasst, der zwischen der ersten Elektrodenplatte (210) und der zweiten Elektrodenplatte (220) angeordnet ist; wobei die erste Elektrodenplatte (210), die zweite Elektrodenplatte (220) und der Separator (230) gestapelt und dann gewickelt sind; die erste Elektrodenplatte (210) einen ersten Stromabnehmer (211) umfasst; die zweite Elektrodenplatte (220) einen zweiten Stromabnehmer (221) und eine Vielzahl von leitfähigen Lagen (223) umfasst, die zusammen mit dem zweiten Stromabnehmer (221) in einem Stück angeordnet sind;
und die Vielzahl von leitfähigen Lagen (223) entlang einer ersten Richtung (X) vom zweiten Stromabnehmer (221) vorspringen, die Vielzahl von leitfähigen Lagen (223) in einer Dickenrichtung (Z) der Elektrodenbaugruppe (200) so gestapelt sind, dass sie einen Sammelabschnitt (224) bilden, und die erste Richtung (X) senkrecht zur Dickenrichtung (Z) verläuft;
eine erste Lasche (300), die mit dem ersten Stromabnehmer (211) verbunden ist und aus dem Gehäuse (100) heraus vorspringt; und
eine zweite Lasche (400), die mit dem Sammelabschnitt (224) verbunden ist und aus dem Gehäuse (100) heraus vorspringt, wobei
eine Leitfähigkeit der ersten Lasche (300) g₁ S/mm ist,
eine Querschnittsfläche der ersten Lasche (300) senkrecht zu einem Erstreckungspfad der ersten Lasche (300) s₁ mm² ist,
eine Leitfähigkeit der Vielzahl von leitfähigen Lagen (223) g₂ S/mm ist,
eine Summe der Querschnittsflächen der Vielzahl von leitfähigen Lagen (223) senkrecht zu einer Erstreckungsrichtung der leitfähigen Lagen (223) s₂ mm² ist, und 0,8 ≤ (g₁ × s₁)/(g₂ × s₂) ≤ 1,2.

2. Elektrochemische Vorrichtung (1) nach Anspruch 1, **dadurch gekennzeichnet, dass** die erste Lasche (300) an den ersten Stromabnehmer (211) geschweißt ist, eine Leitfähigkeit des ersten Stromabnehmers (211) g₃ S/mm ist, eine Schweißfläche zwischen der ersten Lasche (300) und dem ersten Stromabnehmer (211) a₁ mm² ist, und min(g₁, g₃) × a₁/(g₂ × s₂) ≥ 0,8; und/oder
die zweite Lasche (400) an den Sammelabschnitt (224) geschweißt ist, eine Leitfähigkeit der zweiten Lasche (400) g₄ S/mm ist, eine Schweißfläche zwischen der zweiten Lasche (400) und dem Sammelabschnitt (224) a₂ mm² ist, und min(g₂, g₄) × a₂/(g₂ × s₂) ≥ 0,8.

3. Elektrochemische Vorrichtung (1) nach einem der Ansprüche 1 oder 2, **dadurch gekennzeichnet, dass** die erste Lasche (300) einen ersten Abschnitt (310), einen zweiten Abschnitt (320) und einen dritten Abschnitt (330) umfasst, die der Reihe nach verbunden sind; und
der erste Abschnitt (310) mit dem ersten Stromabnehmer (211) verbunden ist, der zweite Abschnitt (320) außerhalb des ersten Stromabnehmers (211) liegt und in einer gebogenen Form angeordnet ist, und der dritte Abschnitt (330) vom Gehäuse (100) vorspringt.

4. Elektrochemische Vorrichtung (1) nach Anspruch 3, **dadurch gekennzeichnet, dass** die Elektrodenbaugruppe (200) eine erste Oberfläche (201) und eine zweite Oberfläche (202) umfasst, die einander in der Dickenrichtung (Z) gegenüberliegen;
der zweite Abschnitt (320) ein erstes Verbindungsteilstück (321) und ein zweites Verbindungsteilstück (322) umfasst;
wobei ein Ende des ersten Verbindungsteilstücks (321) mit dem ersten Abschnitt (310) verbunden ist und ein anderes Ende des ersten Verbindungsteilstücks (321) sich zur ersten Oberfläche (201) hin erstreckt; und
das zweite Verbindungsteilstück (322) auf einer Seite des ersten Verbindungsteilstücks (321) liegt;
wobei ein Ende des zweiten Verbindungsteilstücks (322) mit einem Ende des ersten Verbindungsteilstücks (321) verbunden ist und ein anderes Ende des zweiten Verbindungsteilstücks (322) mit einem Ende des dritten Abschnitts (330) verbunden ist.

5. Elektrochemische Vorrichtung (1) nach Anspruch 4, **dadurch gekennzeichnet, dass** der zweite Abschnitt (320) weiter ein Biegeteilstück (323) umfasst;
ein Ende des Biegeteilstücks (323) mit dem Ende des ersten Verbindungsteilstücks (321) verbunden ist und ein anderes Ende des Biegeteilstücks (323) mit dem einen Ende des zweiten Verbindungsteilstücks (322) verbunden ist.

6. Elektrochemische Vorrichtung (1) nach Anspruch 4, **dadurch gekennzeichnet, dass** in der Dickenrichtung (Z) ein Abstand zwischen der ersten Oberfläche (201) und einem von der ersten Oberfläche (201) entfernt liegenden Ende des dritten Abschnitts (330) L₄₁ mm ist;
in der Dickenrichtung (Z) ein Abstand zwischen der ersten Oberfläche (201) und einem von der ersten Oberfläche (201) entfernt liegenden Ende des ersten Abschnitts (310) L₄₂ mm ist, und
ein Verhältnis L₄₁/L₄₂ kleiner oder gleich 1,1 ist.

7. Elektrochemische Vorrichtung (1) nach einem der Ansprüche 1 bis 6, **dadurch gekennzeichnet, dass** die erste Elektrodenplatte (210) eine negative Elektrodenplatte ist und die zweite Elektrodenplatte (220) eine positive Elektrodenplatte ist; und
die erste Lasche (300) aus einem Material besteht, das Kupfer, eine Kupferlegierung, Nickel oder eine Nickellegierung umfasst; und die zweite Lasche (400) aus einem Material besteht, das Aluminium oder eine Aluminiumlegierung umfasst.

8. Elektrochemische Vorrichtung (1) nach einem der Ansprüche 1 bis 7, **dadurch gekennzeichnet, dass** eine Querschnittsfläche der zweiten Lasche (400) senkrecht zu einem Erstreckungspfad der zweiten Lasche (400) s₃ mm² ist und s₁ größer ist als s₃.

9. Elektrochemische Vorrichtung (1) nach einem der Ansprüche 1 bis 8, **dadurch gekennzeichnet, dass** die erste Elektrodenplatte (210) weiter eine erste aktive Materialschicht (212) umfasst, die auf dem ersten Stromabnehmer (211) angeordnet ist, in der ersten aktiven Materialschicht (212) eine erste Vertiefung (2121) angeordnet ist, die erste Vertiefung (2121) den ersten Stromabnehmer (211) freilegt und die erste Lasche (300) an der ersten Vertiefung (2121) angeordnet und mit dem ersten Stromabnehmer (211) verbunden ist.

10. Elektronische Vorrichtung (2), **dadurch gekennzeichnet, dass** die elektronische Vorrichtung (2) die elektrochemische Vorrichtung (1) nach einem der Ansprüche 1 bis 9 umfasst.

## Revendications

1. Dispositif électrochimique (1) comprenant :
un boîtier (100) ;
un ensemble d'électrodes (200) logé dans le boîtier (100) ; l'ensemble d'électrodes (200) comprenant une première plaque d'électrode (210), une seconde plaque d'électrode (220) et un séparateur (230) disposé entre la première plaque d'électrode (210) et la seconde plaque d'électrode (220) ; la première plaque d'électrode (210), la seconde plaque d'électrode (220) et le séparateur (230) étant empilés puis enroulés ; la première plaque d'électrode (210) comprend un premier collecteur de courant (211) ; la seconde plaque d'électrode (220) comprend un second collecteur de courant (221) et une pluralité de feuilles conductrices (223) disposées conjointement avec le second collecteur de courant (221) en une seule pièce ; et la pluralité de feuilles conductrices (223) font saillie du second collecteur de courant (221) le long d'une première direction (X), la pluralité de feuilles conductrices (223) sont empilées dans une direction d'épaisseur (Z) de l'ensemble d'électrodes (200) pour former une partie de collecte (224), et la première direction (X) est perpendiculaire à la direction d'épaisseur (Z) ;
une première languette (300), connectée au premier collecteur de courant (211) et faisant saillie hors du boîtier (100) ; et
une seconde languette (400), reliée à la partie de collecte (224) et dépassant du boîtier (100), dans laquelle
une conductivité de la première languette (300) est g₁ S/mm,
une surface de section transversale de la première languette (300) perpendiculaire à un trajet d'extension de la première languette (300) est s₁ mm²,
une conductivité de la pluralité de feuilles conductrices (223) est g₂ S/mm,
une somme des surfaces de section transversale de la pluralité de feuilles conductrices (223) perpendiculaires à une direction d'extension des feuilles conductrices (223) est s₂ mm², et 0,8 ≤ (g₁ × s₁)/(g₂ × s₂) ≤ 1,2.

2. Dispositif électrochimique (1) selon la revendication 1, **caractérisé en ce que**, la première languette (300) est soudée au premier collecteur de courant (211), une conductivité du premier collecteur de courant (211) est g₃ S/mm, une zone de soudure entre la première languette (300) et le premier collecteur de courant (211) est a₁ mm², et min(g₁, g₃) × a₁/(g₂ × s₂) ≥ 0,8 ; et/ou
la seconde languette (400) est soudée à la partie de collecte (224), une conductivité de la seconde languette (400) est g₄ S/mm, une zone de soudure entre la seconde languette (400) et la partie de collecte (224) est a₂ mm², et min(g₂, g₄) × a₂/(g₂ × s₂) ≥ 0,8.

3. Dispositif électrochimique (1) selon l'une quelconque des revendications 1 ou 2, **caractérisé en ce que** la première languette (300) comprend une première partie (310), une deuxième partie (320) et une troisième partie (330) connectées en séquence ; et
la première partie (310) est connectée au premier collecteur de courant (211), la deuxième partie (320) est située à l'extérieur du premier collecteur de courant (211) et disposée dans une forme courbée, et la troisième partie (330) fait saillie hors du boîtier (100).

4. Dispositif électrochimique (1) selon la revendication 3, **caractérisé en ce que** l'ensemble d'électrodes (200) comprend une première surface (201) et une deuxième surface (202) opposées l'une à l'autre dans la direction de l'épaisseur (Z) ;
la deuxième partie (320) comprend une première section de connexion (321) et une deuxième section de connexion (322) ;
une extrémité de la première section de connexion (321) étant connectée à la première partie (310) et une autre extrémité de la première section de connexion (321) s'étendant vers la première surface (201) ; et
la seconde section de connexion (322) est située sur un côté de la première section de connexion (321) ;
dans lequel une extrémité de la seconde section de connexion (322) est connectée à une extrémité de la première section de connexion (321) et une autre extrémité de la seconde section de connexion (322) est connectée à une extrémité de la troisième partie (330).

5. Dispositif électrochimique (1) selon la revendication 4, **caractérisé en ce que** la seconde partie (320) comprend en outre une section coudée (323) ;
une extrémité de la section coudée (323) est connectée à l'extrémité de la première section de connexion (321) et une autre extrémité de la section coudée (323) est connectée à l'extrémité de la seconde section de connexion (322).

6. Dispositif électrochimique (1) selon la revendication 4, **caractérisé en ce que**, dans la direction de l'épaisseur (Z), une distance entre la première surface (201) et une extrémité de la troisième partie (330) éloignée de la première surface (201) est L₄₁ mm ;
dans la direction de l'épaisseur (Z), une distance entre la première surface (201) et une extrémité de la première partie (310) éloignée de la première surface (201) est L42 mm, et un rapport L₄₁/L₄₂ est inférieur ou égal à 1,1.

7. Dispositif électrochimique (1) selon l'une quelconque des revendications 1 à 6, **caractérisé en ce que** la première plaque d'électrode (210) est une plaque d'électrode négative, et la seconde plaque d'électrode (220) est une plaque d'électrode positive ; et
la première languette (300) est constituée d'un matériau comprenant du cuivre, un alliage de cuivre, du nickel ou un alliage de nickel ; et la seconde languette (400) est constituée d'un matériau comprenant de l'aluminium ou un alliage d'aluminium.

8. Dispositif électrochimique (1) selon l'une quelconque des revendications 1 à 7, **caractérisé en ce que** la section transversale de la seconde languette (400) perpendiculaire à un trajet d'extension de la seconde languette (400) est de s₃ mm², et s₁ est supérieur à s₃.

9. Dispositif électrochimique (1) selon l'une quelconque des revendications 1 à 8, **caractérisé en ce que** la première plaque d'électrode (210) comprend en outre une première couche de matériau actif (212) disposée sur le premier collecteur de courant (211), un premier évidement (2121) est disposé dans la première couche de matériau actif (212), le premier évidement (2121) expose le premier collecteur de courant (211), et la première languette (300) est disposée au niveau du premier évidement (2121) et connectée au premier collecteur de courant (211).

10. Dispositif électronique (2), **caractérisé en ce que** le dispositif électronique (2) comprend le dispositif électrochimique (1) selon l'une quelconque des revendications 1 à 9.
